(19) Europäisches Patentamt
European Patent Office
Office européen des brevets

(11) EP 0 751 167 B1

(12) EUROPÄISCHE PATENTSCHRIFT

(45) Veröffentlichungstag und Bekanntmachung des Hinweises auf die Patenterteilung:
**19.09.2001 Patentblatt 2001/38**

(51) Int Cl.[7]: **C08G 64/18**, C08L 69/00, C08F 8/06
// (C08L69/00, 23:22, 51:04)

(21) Anmeldenummer: **96109561.9**

(22) Anmeldetag: **14.06.1996**

(54) **Blockcopolycarbonate mit Polyisobutylen-Alpha-Halogen-Ketocarbonsäure-Blöcken**

Block copolycarbonates with polyisobutylene-alpha-halogen-ketocarboxylic acid-blocks

Copolycarbonates séquencés à blocs de polyisobutylène-alpha-halogène-acide cétocarboxylique

(84) Benannte Vertragsstaaten:
**BE DE ES FR GB IT NL**

(30) Priorität: **27.06.1995 DE 19522766**

(43) Veröffentlichungstag der Anmeldung:
**02.01.1997 Patentblatt 1997/01**

(73) Patentinhaber: **BAYER AG**
**51368 Leverkusen (DE)**

(72) Erfinder:
- **Weider, Richard, Dr.**
  **51381 Leverkusen (DE)**
- **Köhler, Burkhard, Dr.**
  **51373 Leverkusen (DE)**
- **Ebert, Wolfgang, Dr.**
  **47800 Krefeld (DE)**
- **Scholl, Thomas, Dr.**
  **51469 Bergisch Gladbach (DE)**
- **Horn, Klaus, Dr.**
  **41539 Dormagen (DE)**

(56) Entgegenhaltungen:
**EP-A- 0 305 718** **DE-A- 4 424 399**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 751 167 B1

Printed by Jouve, 75001 PARIS (FR)

## Beschreibung

Die Erfindung betrifft Blockcopolycarbonate aus Polycarbonat-Blöcken und Polyisobutylen-α-halogen-ketocarbonsäure-Blöcken (abgekürzt PIB-Blöcke), wobei die PIB-Blöcke durch Ozonolyse von halogeniertem Butylkautschuk zugänglich sind, sowie Blends dieser Blockcopolycarbonate mit Elastomeren.

Die erfindungsgemäßen Blockcopolycarbonate zeichnen sich durch eine sehr gute Chemikalienbeständigkeit aus, eignen sich zusätzlich als Mischungspartner für thermoplastische und elastomermodifizierte Formmassen, die ausgezeichnete Schlagzähigkeit und Chemikalienbeständigkeit aufweisen.

Gegenstand der Erfindung sind Blockcopolycarbonate erhältlich aus Polycarbonat-Blöcken und 0,5 bis 30 Gew.-% (bezogen auf das Blockcopolycarbonat) Polyisobutylen-α-halogen-ketocarbonsäure-Blöcke (PIB-Blöcke), wobei die Polyisobutylen-α-halogen-ketocarbonsäure-Blöcke mittlere Molekulargewichte Mn (Zahlenmittel) zwischen 500 und 50 000, Halogengehalte (Chlor oder Brom) zwischen 0,1 und 15 Gew.-%% (bezogen auf PIB-Bllöcke) und Säurezahlen zwischen 2 und 250 mg KOH/g aufweisen und durch oxidative Spaltung von Halobutylkautschuken, die durch Copolymerisation von Isobutylen mit 0,3 bis 15 Mol-% 1,3-Dienen und anschließender Halogenierung in Allylstellung mit elementarem Brom oder Chlor in Lösung erhältlich sind, mit Ozon erhältlich sind.

Die erfindungsgemäßen Blockcopolycarbonate werden hergestellt, indem man der Polykondensationsreaktion, d.h. der Herstellung von Polycarbonaten aus Diphenolen, Phosgen, Kettenabbrechern und gegebenenfalls Verzweigern, die Polyisobutylen-α-halogen-ketocarbonsäuren zusetzt.

Der Einbau der PIB-Blöcke in die Polymerkette während der Phasengrenzflächen-Polykondensation erfolgt über Esterbindungen und zusätzlich durch Ersatz von Halogen über Etherbindungen.

Das Molekulargewicht $\overline{M}_w$ (Gewichtsmittel, ermittelt durch Lichtstreuung) der so hergestellten Blockcopolycarbonate liegt im allgemeinen zwischen 8000 und 150.000 bzw. die Blockcopolycarbonate haben eine relative Lösungsviskosität von 1,15 bis 1,5 (ermittelt an einer 0,5 %igen Lösung in Methylenchlorid bei 25°C).

Die Polyisobutylen-α-halogen-ketocarbonsäuren lassen sich durch oxidative Spaltung von Halobutylkautschuken nach bekannten Verfahren erhalten. In einem besonders geeigneten Verfahren wird zur oxidativen Spaltung Ozon verwendet.

Die zur Herstellung benötigten Halobutylkautschuke sind kommerziell verfügbare hochmolekulare, feste Polymerisate, die durch Copolymerisation von Isobutylen mit 0,3 bis 15 Mol-% Isopren und anschließender vorsichtiger Halogenierung in Allylstellung mit elementarem Brom oder Chlor in Lösung erhältlich sind. Das Isopren liegt dabei im wesentlichen in der 1,4-Position verknüpft vor. Geringe Anteile 1,2-Verknüpfung, wie sie in allen kommerziell erhältlichen Butylkautschuken vorhanden ist und die sich nicht vollständig unterdrücken läßt, führen zu ebenfalls geringen Anteilen seitenständiger Carboxylgruppen in den Oxidationsprodukten. Der Halogengehalt in den Halobutylkautschuken beträgt zwischen 0,1 und 15 Gew.-%, bevorzugt zwischen 0,5 und 5 Gew.-%. Die Mooney-Viskosität der Halobutylkautschuke liegt zwischen 30 und 80 (ML 1+8, 125°C) und das mittlere Molekulargewicht $M_n$ (Zahlenmittel, bestimmt durch Gelpermeationschromatographie) zwischen 20.000 und 1.000.000, bevorzugt zwischen 100.000 und 500.000. Geeignete Halobutylkautschuke sind z.B. in Ullmann's Encyclopedia of industrial Chemistry, Vol. A23 (1993), S. 314 ff. beschrieben. Neben Isopren sind auch andere 1,3-Diene als Comonomere geeignet, solche Produkte sind aber nicht kommerziell verfügbar. Geeignete Comonomere sind z.B. in H. Güterbock, "Polyisobutylen und Isobutylen-Mischpolymerisate", Springer Verlag, Berlin 1959 genannt.

Durch die oxidative Behandlung von Halobutylykautschuklösungen mit Ozon werden die Halobutylkautschuke an den noch vorhandenen Doppelbindungen unter Reduzierung des Molekulargewichts und Bildung von Carboxyl- Keton- oder Aldehydgruppen gespalten. In α-Stellung zu den Carboxyl- oder Carbonylgruppen befindet sich je nach verwendetem Ausgangspolymerisat Chlor oder Brom.

Die Säurezahl und das Molekulargewicht der so erhältlichen Polyisobutylen-α-halogen-ketocarbonsäuren ist vom Gehalt an Isopren bzw. Dien im Copolymeren und dem gewählten Ozonüberschuß abhängig. Sie liegt im allgemeinen zwischen 2 und 250 mg KOH/g, bevorzugt zwischen 2 und 100 mg KOH/g, besonders bevorzugt zwischen 2 und 50 mg KOH/g. Das Molekulargewicht $\overline{M}_n$ (Zahlenmittel, bestimmt durch HPGPC) der Produkte liegt im allgemeinen zwischen 500 und 50.000, bevorzugt zwischen 1.000 und 10.000, der Halogengehalt entspricht dem der eingesetzten Halobutylkautschuke. Die Polyisobutylen-α-halogenketocarbonsäuren sind neu und ebenfalls Gegenstand der vorliegenden Anmeldung.

Erfindungsgemäß geeignete, thermoplastische, aromatische Polycarbonate sind solche auf Basis der Diphenole der Formel (I)

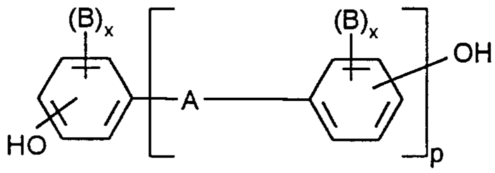

(I)

worin

A eine Einfachbindung, $C_1$-$C_5$-Alkylen, $C_2$-$C_5$-Mkyliden, $C_5$-$C_6$-Cycloalkyliden, -S- oder -$SO_2$-,

B Chlor, Brom

x 0, 1 oder 2 und

p 1 oder 0 sind

oder alkylsubstituierte Dihydroxyphenylcycloalkane der Formel (II),

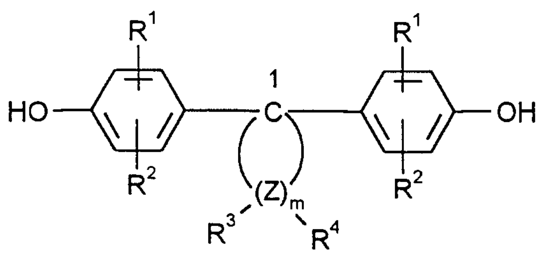

(II)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^3$ und $R^4$ gleichzeitig Alkyl bedeuten.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und $\alpha,\alpha$-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,

α,α-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methyl-cyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

1,1-Bis-(4-hydroxyphenyl)-3,3,5-trimethylcyclohexan,
1,1-Bis-(4-hydroxyphenyl)-3-methylcyclohexan,
1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1 -Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die Herstellung der erfindungsgemäßen Blockpolycarbonate kann im wesentlichen nach dem bekannten Lösungsverfahren in disperser Phase (sogenanntes Zweiphasengrenzflächenverfahren) (vgl. H. Schnell, "Chemistry and Physics of Polycarbonates", Polymer Review, Vol. IX, Seite 27 ff., Interscience Publ. 1964) erfolgen:

Hierbei werden die einzusetzenden Diphenole in wäßriger alkalischer Phase gelöst. Dazu werden die zur Herstellung der erfindungsgemäßen Polycarbonate erforderlichen Kettenabbrecher in Mengen von 1 bis 20 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C und 40°C. Die Polyisobutylen-α-halogen-ketocarbonsäuren werden in gewünschter Menge der Reaktion zugesetzt als Reinsubstanz oder im die organische Phase bildenden Lösemittel gelöst.

Die Zugabe der erforderlichen Kettenabbrecher in Art und Menge wie oben angegeben, kann auch während der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger mitverwendet, so kann deren Zugabe vor der Umsetzung mit Phosgen oder während der Phosgenierung erfolgen.

Neben oder anstelle der Diphenole können auch deren Chlorkohlensäureester eingesetzt werden.

Die Isolierung der erfindungsgemäßen Blockcopolycarbonate erfolgt in bekannter Weise. Geeignete Aufarbeitungsverfahren sind insbesondere das Ausfällen, die Sprühtrocknung und das Verdampfen des Lösungsmittels im Vakuum.

Neben den Diphenolen können auch bis zu 50 Mol-%, bezogen auf die eingesetzten Diphenole, von deren Bischlorkohlensäureestern eingesetzt werden.

Den erfindungsgemäßen Blockcopolycarbonaten können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Die erfindungsgemäßen Blockcopolycarbonate können zu Formkörpern verarbeitet werden, indem man beispielsweise die in bekannter Weise isolierten Blockcopolycarbonate zu Granulat extrudiert und dieses Granulat gegebenenfalls nach Zusatz der obengenannten Additive durch Spritzguß zu verschiedenen Artikeln in bekannter Weise verarbeitet.

Die erfindungsgemäßen Blockcopolycarbonate sind als Formkörper überall dort einsetzbar, wo die bislang bekannten Polycarbonate eingesetzt wurden, also beispielsweise im Elektrosektor sowie im Bausektor, und zwar dann, wenn erhöhte Chemikalienbeständigkeit verlangt wird.

Beispiele für Verwendungen sind Folien, Verbundfolien, Extrusions- und Spritzgußformteile mit und ohne Füllstoffe bzw. Glasfaserverstärkung wie z.B. Sicherheitshelme, Schaumstoffe, Plattenware und Blaskörper, sowie medizinische Artikel, wie Schläuche und Kurzzeitimplantate.

Die erfindungsgemäßen Blockcopolycarbonate dienen weiterhin als Blendpartner für thermoplastische Formmassen.

Gegenstand der Erfindung sind daher thermoplastische Formmassen enthaltend

A) 5 bis 98, vorzugsweise 10 bis 50, besonders bevorzugt 10 bis 30 Gew.-Teile erfindungsgemäße Blockcopolycarbonate,

B) 0 bis 99, vorzugsweise 20 bis 88, besonders bevorzugt 30 bis 88 Gew.-Teile aromatische Polycarbonate und gegebenenfalls

C) 2 bis 20, vorzugsweise 2 bis 10, besonders bevorzugt 5 bis 10 Gew.-Teile Polyisobutylen oder

D) 5 bis 50, vorzugsweise 10 bis 50, besonders bevorzugt 20 bis 50 Gew.-Teile Pfropfpolymerisat,

wobei die Summe aller Gewichtsteile der Komponenten A + B + C + D 100 ergibt,
mit der Maßgabe, daß der Gehalt an Polyisobutylen-α-halogen-ketocarbonsäuren in der Gesamt-Mischung (aus A + B + C + D) 0,5 bis 20, vorzugsweise 0,5 bis 5 Gew.-% auf 100 Gew.-% und mit der Maßgabe, daß die Mischung Komponente B) enthält, falls Komponente C) oder D) nicht enthalten sind.

Für Mischungen aus Komponente A), B) und gegebenenfalls C) beträgt der Gehalt an PIB-Blöcken an der Gesamtmischung insbesondere 0,5 bis 4 Gew.-%.

Für Mischungen aus Komponente A), D) und gegebenenfalls B) beträgt der Gehalt an PIB-Blöcken an der Gesamtmischung insbesondere 1 bis 5 Gew.-%.

Die aromatischen Polycarbonate, die der Mischung zugesetzt werden können, entsprechen den bei den Blockcopolycarbonaten beschriebenen Polycarbonaten.

Die thermoplastischen, aromatischen Polycarbonate haben mittlere Gewichtsmittelmolekulargewichte ($\overline{M}_w$), gemessen durch Ultrazentrifugation oder Streulichtmessung, von 10.000 bis 200.000, vorzugsweise 20.000 bis 80.000 bzw. haben eine relative Lösungsviskosität von 1,15 bis 1,50 (ermittelt mit einer 0,5 %igen Lösung in Methylenchlorid bei 25°C). Komponente B) sind aromatische Polycarbonate auf Basis der Diphenole der oben erwähnten Formeln (I) und/oder (II) und sind dort beschrieben.

PIB-Kautschuke gemäß Komponente C) der vorliegenden Erfindung sind kationische Polymerisate von Olefinen und gegebenenfalls Dienen mit einem Gehalt von mindestens 85 % Isobutylen. Polyisobutylene sind unter dem Stichwort "Polyisobutylene" auf Seite 3539, Band 5, in Römpp Chemie Lexikon, 9. Auflage, 1992, Georg Thieme Verlag beschrieben. Die Molmasse der erfindungsgemäß zu verwendenden Polyisobutylene beträgt 1.000 bis 5.000.000, vorzugsweise 10.000 bis 1.200.000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3), 2-Propylbutadien-(1,3), 2-Phenylbutadien-(1,3), 2-Methylpentadien-(1,3) oder 3-Propylhexadien.

Andere geeignete olefinische Comonomere sind Styrol, α-Methylstyrol, m/p-Methylstyrol oder Divinylbenzol.

Derartige Produkte sind im Handel als Butylkautschuke erhältlich.

Die Pfropfpolymerisate (gemäß Komponente D)) umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393 - 406 und in C.B. Bucknall, "Toughened Plastics", Appl. Science Publishers, London 1977, beschrieben sind. Bevorzugte Polymerisate D) sind partiell vernetzt und besitzen Gelgehalte von über 20 Gew.-%, vorzugsweise über 40 Gew.-%, insbesondere über 60 Gew.-%.

Bevorzugte Pfropfpolymerisate D) umfassen Pfropfpolymerisate aus:

D.1) 5 bis 95, vorzugsweise 30 bis 80, Gew.-Teile, einer Mischung aus

D.1.1) 50 bis 95 Gew.-Teilen Styrol, ∝-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und

D.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. phenyl-N-substituierte Maleinimide oder Mischungen dieser Verbindungen auf

D.2) 5 bis 95, vorzugsweise 20 bis 70, Gew.-Teilen Polymerisat mit einer Glasübergangstemperatur unter -10°C.

Bevorzugte Pfropfpolymerisate D) sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate D) sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate D) sind Pfropfpolymerisate, die durch Pfropfreaktion von

I. 10 bis 70, vorzugsweise 15 bis 50, insbesondere 20 bis 40, Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats D) 0,05 bis 2, vorzugsweise 0,1 bis 0,6 um, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/ oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D) auch solche Produkte verstanden, die durch Polymerisation der Pfropfmonomeren in Gegenwart der Pfropfgrundlage, z.B. SAN-Copolymerisates, gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Besonders bevorzugte Pfropfpolymerisate D) sind z.B. auch Pfropfpolymerisate aus

(a) 20 bis 90 Gew.-%, bezogen auf D), Acrylatkautschuk mit einer Glasübergangstemperatur unter -20°C als Pfropfgrundlage und

(b) 10 bis 80 Gew.-%, bezogen auf D), mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Acrylatkautschuke (a) der Polymerisate D) sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, ∝-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE 37 04 657, DE 37 04 655, DE 36 31 540 und DE 36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Die Mischung der Komponenten erfolgt durch Mischen in der Schmelze in Knetern oder Extrudern bei erhöhter Temperatur, im allgemeinen bei Temperaturen von 230 bis 330°C.

Die erfindungsgemäßen Mischungen aus den Komponenten können noch die üblichen, für Polycarbonate bzw. Butylkautschuke üblichen Additive zugesetzt enthalten, wie z.B. Stabilisatoren, Entformungsmittel, Alterungsschutzmittel, Flammschutzmittel, Füll- und Verstärkungsstoffe, Pigmente, Farbstoffe etc., z.B. Ruß. Diese Additive können während der Herstellung der Mischungen zu beliebigen Formkörpern in üblichen Mengen zugesetzt werden.

Die erfindungsgemäßen Formmassen können zur Herstellung von Formkörpern jeder Art, z.B. durch Spritzgießen, verwendet werden. Beispiele für Formkörper sind Gehäuse von Haushaltsgeräten und elektrischen Geräten.

Gegenstand der Erfindung ist daher auch die Verwendung der Formmassen zur Herstellung von Formkörpern.

Die einzelnen Komponenten der Mischung können ganz oder teilweise aus Recyclaten oder Produktionsabfällen bestehen.

## Beispiele

### Beispiel 1

A) Herstellung einer chlorhaltigen Polyisobutylen-α-halogen-ketocarbonsäure

10 kg Chlorobutylkautschuk mit einem Chlorgehalt von 1,2 Gew.-% und einer Mooney-Viskosität von 46 (ML 1+8, 125°C) (Polysar Chlorobutyl 1255, Handelsprodukt der Bayer AG) werden in grobe Stücke (ca. 2 cm Durchmesser) zerkleinert und in 40 1 Hexan suspendiert. In die Mischung wird unter Rühren bei 15 bis 25°C ein mit Ozon angereicherter Sauerstoffstrom (1.000 l/h, Ozonmenge ca. 15 g/h) eingeleitet, bis eine Säurezahl von 11 erreicht ist. Die

erforderliche Einleitzeit beträgt hierfür 40 Stunden. Während des Einleitens lösen sich die festen Anteile vollständig auf. Nach Spülen mit Stickstoff wird das Lösemittel abdestilliert. das Mittlere Molekulargewicht ($\overline{M}$n) beträgt 4 400, der Chlorgehalt beträgt 1,2 Gew.-%, Säurezahl ist 13.

B) Herstellung eines PC/PIB-Blockcokondensats

Man legt 8.000 g 45 % NaOH, 40 1 Wasser, 4560 g Bisphenol-A, 45 g tert.-Butylphenol, 564 g chlorhaltiges PIB-Telechel nach Beispiel 1 A), 13,2 kg Chlorbenzol und 37,2 kg Methylenchlorid vor, leitet 3.000 g Phosgen ein und kondensiert unter Zugabe von 28 ml N-Ethylpiperidin auf. Die Isolierung erfolgt wie üblich durch Ansäuern, Abtrennung der organischen Phase und Eindampfen im Ausdampfextruder. Das Blockcopolycarbonat enthält 10 Gew.-% PIB-Anteil.

Die relative Lösungsviskosität (0,5 % in Methylenchlorid bei 25°C) beträgt 1,37.

Man erhält ein Material mit einem Zäh-Sprödübergang von -20°C im Kerbschlagversuch (ISO 180).

Nach 2-minütiger Einwirkung von Isooctan/Toluol 1:1 bei einer Randfaserdehnung von 0,6 % sind Stäbe aus diesem Material im anschließenden Schlagbiegeversuch (ISO 179) nicht gebrochen.

**<u>Beispiel 2</u>**

(Herstellung eines PC/PIB-Blockcokondensats)

Man legt 8.000 g 45 % NaOH, 40 l Wasser, 4560 g Bisphenol-A, 45 g tert.-Butylphenol, 1270 g chlorhaltiges PIB-Telechel nach Beispiel 1, 13,2 kg Chlorbenzol und 37,2 kg Methylenchlorid vor, leitet 3.000 g Phosgen ein und kondensiert unter Zugabe von 28 ml N-Ethylpiperidin auf. Die Isolierung erfolgt wie üblich durch Ansäuern, Abtrennung der organischen Phase, Waschen mit entionisiertem Wasser und Eindampfen im Ausdampfextruder. Das Blockcopolycarbonat enthält 20 Gew.-% PIB.

Die relative Lösungsviskosität (0,5 % in Methylenchlorid bei 25°C) beträgt 1,34.

Man erhält ein Material mit einem Zäh-Spröd-Übergang von -20/-30°C im Kerbschlagversuch (ISO 180).

Die Schmelzviskosität bei 1.000 l/s und 300°C beträgt 59 Pa.s (unmodifiziertes PC mit einer relativen Lösungsviskosität von 1,28 zeigt eine Schmelzviskosität von 360 Pa.s).

Nach 2-minütiger Einwirkung von Isooctan/Toluol 1:1 bei einer Randfaserdehnung von 0,6 % sind Stäbe aus diesem Material im anschließenden Schlagbiegeversuch (ISO 179) nicht gebrochen.

**<u>Beispiel 3</u>**

Herstellung eines Blends mit der Zusammensetzung:

10 Gew.-Teile PC/PIB-Blockcopolycarbonat gemäß Beispiel 2
82 Gew.-Teile Polycarbonat
8 Gew.-Teile Polyisobutylen-Kautschuk

Man löst 2.050 g Polycarbonat auf Basis Bisphenol A mit einer relativen Lösungsviskosität von 1,28 (0,5 %ige Lösung in Methylenchlorid bei 25°C), 250 g PC/PIB-Blockcokondensat nach Beispiel 2 und 200 g Polyisobutylenkautschuk mit ca. 2 Gew.-% Isopren als Comonomer und einer Molmasse von ca. 400.000 g/mol in einer Mischung aus 8 l Chlorbenzol und 8 l Methylenchlorid und dampft gemeinsam auf einer ZSK 32 mit Vakuumdom aus.

Man erhält ein Material mit einem Zäh-Spröd-Übergang von -20°C im Kerbschlagversuch (nach ISO 180).

Die Schmelzviskosität bei 1.000 l/s und 300°C beträgt 147 Pa.s.

Nach 2-minütiger Einwirkung von Isooctan/Toluol 1:1 bei einer Randfaserdehnung von 0,6 % sind Stäbe aus diesem Material im anschließenden Schlagbiegeversuch (nach ISO 179) nicht gebrochen.

**<u>Beispiel 4</u>**

Herstellung eines Blends mit der Zusammensetzung

20 Gew.-Teile PC/PIB-Blockcopolycarbonat gemäß Beispiel 2

40 Gew.-Teile Polycarbonat
40 Gew.-Teile ABS-Pfropfpolymerisat

Als Polycarbonat wird Polycarbonat auf Basis von Bisphenol A mit einer relativen Lösungsviskosität von 1,26 (0,5 %ige Lösung in Methylenchlorid bei 25°C) eingesetzt.
Als ABS-Pfropfpolymerisat wird eine Mischung aus 42 Teilen eines Pfropfpolymerisates von 50 Gew.-Teilen Styrol und Acrylnitril im Gewichtsverhältnis 72:28 auf 50 Gew.-Teile teilchenförmigem vernetztem Polybutadienkautschuk (mittlerer Teilchendurchmesser ($d_{50}$)) von 0,4 um, erhalten durch Emulsionspolymerisation und 58 % Styrol-Acrylnitril-Harz (S:AN 72:28) eingesetzt.
Die Komponenten werden in einem Kneter bei 200°C gemischt und extrudiert.
Die Prüfkörper zeigen bei -40°C im Kerbschlagversuch (nach ISO 180) noch Zähbruch (51 kJ/$m^2$).

## Vergleichsbeispiel

Ein Blend aus 60 Gew-% Polycarbonat auf Basis Bisphenol A mit einer relativen Lösungsviskosität von 1,26 (0,5 %ige Lösung in Methylenchlorid bei 25°C) und 40 Gew.-% o.g. ABS-Pfropfpolymerisat, wird bei 200°C in einem Kneter compoundiert und extrudiert. Die Prüfstäbe zeigen bei -40°C im Kerbschlagversuch (nach ISO 180) Spröd-Brüche (34,6 kJ/$m^2$).

## Patentansprüche

**1.** Blockcopolycarbonate erhältlich aus Polycarbonat-Blöcken und 0,5 bis 30 Gew.-% (bezogen auf das Blockcopolycarbonat) Polyisobutylen-α-halogenketocarbonsäure-Blöcke (PIB-Blöcke), wobei die Polyisobutylen-α-halogenketocarbonsäure-Blöcke mittlere Molekulargewichte Mn (Zahlenmittel) zwischen 500 und 50 000, Halogengehalte (Chlor oder Brom) zwischen 0,1 und 15 Gew.-%% (bezogen auf PIB-Bllöcke) und Säurezahlen zwischen 2 und 250 mg KOH/g aufweisen und durch oxidative Spaltung von Halobutylkautschuken, die durch Copolymerisation von Isobutylen mit 0,3 bis 15 Mol-% 1,3-Dienen und anschließender Halogenierung in Allylstellung mit elementarem Brom oder Chlor in Lösung erhältlich sind, mit Ozon erhältlich sind.

**2.** Blockcopolycarbonate gemäß Anspruch 1, wobei die Polyisobutylen-α-halogen-ketocarbonsäure-Blöcke durch oxidative Spaltung von Halobutylkautschuken mit Ozon erhältlich sind, wobei die Halobutylkautschuke erhältlich sind durch Copolymerisation von Isobutylen mit 0,3 bis 15 Mol-% Isopren und anschließender Halogenierung in Allylstellung mit elementarem Brom oder Chlor in Lösung und wobei die Mooney-Viskosität der Halobutylkautschuke zwischen 30 und 80 und das mittlere Molekulargewicht Mn zwischen 20.000 und 1.000.000 liegt.

**3.** Blockcopolycarbonate gemäß Anspruch 1, wobei das Molekulargewicht ($\overline{M}_w$) der Blockcopolycarbonate 8 000 bis 150 000 beträgt.

**4.** Blockcopolycarbonate gemäß Anspruch 1, wobei die Polyisobutylen-α-halogen-ketocarbonsäure-Blöcke mittlere Molekulargewichte $\overline{M}n$ (Zahlenmittel) von 50 bis 50 000 haben.

**5.** Blockcopolycarbonate gemäß Anspruch 1, wobei der Halogengehalt der PIB-Blöcke 0,5 bis 5 Gew.-% beträgt.

**6.** Verfahren zur Herstellung von Blockcopolycarbonaten gemäß Anspruch 1, wobei nach dem Lösungsverfahren in disperser Phase Diphenole, Phosgen, in Gegenwart von Kettenabbrechern, gegebenenfalls in Gegenwart von Verzweigungsmitteln und/oder Katalysatoren unter Zugabe von Polyisobutylen-α-halogen-ketocarbonsäuren umgesetzt werden.

**7.** Thermoplastische Formmassen enthaltend

A) 10 bis 98 Gew.-Teile Blockcopolycarbonate gemäß Anspruch 1,
B) 0 bis 88 Gew.-Teile aromatische Polycarbonate und gegebenenfalls
C) 2 bis 20 Gew.-Teile Polyisobutylen oder
D) 5 bis 50 Gew.-Teile Pfropfpolymerisat

wobei die Summe aller Gewichtsteile der Komponenten A + B + C + D 100 ergibt,
mit der Maßgabe, daß der Gehalt an Polyisobutylen-α-halogen-ketocarbonsäuren in der Gesamt-Mischung (aus

A + B + C + D) 0,5 bis 20 Gew.-% auf 100 Gew.-% und mit der Maßgabe, daß die Mischung Komponente B) enthält, falls Komponente C) oder D) nicht enthalten sind.

**8.** Thermoplastische Formmassen gemäß Anspruch 7, wobei die Pfropfpolymerisate aus mindestens 2 der folgenden Monomeren erhältlich sind: Chloropren, Butadien-1,3, Isopren, halogen- oder methylkernsubstituiertem Styrol, Ethylen, Propylen, Vinylacetat, $C_1$-$C_{18}$-Alkylmethacrylat, $C_1$-$C_{18}$-Alkylacrylat, Maleinsäureanhydrid, $C_1$-$C_4$-alkyl- oder -phenyl-N-substituierte Maleinimide.

**9.** Thermoplastische Formmassen gemäß Anspruch 8, wobei die Pfropfpolymerisate erhältlich sind aus

D.1) 5 bis 95 Gew.-Teile, einer Mischung aus

D.1.1) 50 bis 95 Gew.-Teilen Styrol, ∝-Methylstyrol, halogen- oder methylkernsubstituiertem Styrol, $C_1$-$C_8$-Alkylmethacrylat, $C_1$-$C_8$-Alkylacrylat oder Mischungen dieser Verbindungen und

D.1.2) 5 bis 50 Gew.-Teilen Acrylnitril, Methacrylnitril $C_1$-$C_8$-Alkylmethacrylaten, $C_1$-$C_8$-Alkylacrylat, Maleinsäureanhydrid, $C_1$-$C_4$-alkyl-bzw. phenyl-N-substituierte Maleinimide oder Mischungen dieser Verbindungen auf

D.2) 5 bis 95 Gew.-Teilen Polymerisat mit einer Glasübergangstemperatur unter -10°C.

**10.** Thermoplastische Formmassen gemäß Anspruch 7, enthaltend Additive ausgewählt aus der Gruppe der Stabilisatoren, Entformungshilfsmittel, Alterungsschutzmittel, Flammschutzmittel, Pigmente, Farbstoffe, Füll- und Verstärkungsstoffe.

## Claims

**1.** Block copolycarbonates obtainable from polycarbonate blocks and 0.5 to 30 % by weight (with respect the block copolycarbonate) of polyisobutylene-α-halogeno-ketocarboxylic acid blocks (PIB blocks), wherein the polyisobutylene-α-halogeno-ketocarboxylic blocks have average molecular weights Mn (number average) between 500 and 50,000, halogen contents (chlorine or bromine) between 0.1 and 15 % by weight (with respect to the PIB blocks) and acid numbers between 2 and 250 mg KOH/g and are obtainable by the oxidative cleavage with ozone of halobutyl rubbers which can be obtained by the copolymerisation of isobutylene with 0.3 to 15 mol % of 1,3-dienes and subsequent halogenation in the allyl position with elemental bromine or chlorine in solution.

**2.** Block copolycarbonates according to claim 1, wherein the polyisobutylene-α-halogeno-ketocarboxylic acid blocks are obtainable by the oxidative cleavage of halobutyl rubbers with ozone, wherein the halobutyl rubbers can be obtained by the copolymerisation of isobutylene with 0.3 to 15 mol % isoprene and subsequent halogenation in the allyl position with elemental bromine or chlorine in solution, and wherein the Mooney viscosity of the halobutyl rubbers is between 30 and 80 and their average molecular weight Mn is between 20,000 and 1,000,000.

**3.** Block copolycarbonates according to claim 1, wherein the molecular weight ($M_w$) of the block copolycarbonates ranges from 8000 to 150,000.

**4.** Block copolycarbonates according to claim 1, wherein the polyisobutylene-α-halogeno-ketocarboxylic blocks have average molecular weights Mn (number average) from 50 to 50,000.

**5.** Block copolycarbonates according to claim 1, wherein the halogen content of the PIB blocks ranges from 0.5 to 5 % by weight.

**6.** A process for producing block copolycarbonates according to claim 1, wherein diphenols and phosgene are reacted by the solution method in a disperse phase, in the presence of chain terminators and optionally in the presence of branching agents and/or catalysts, with the addition of polyisobutylene-α-halogenoketocarboxylic acids.

**7.** Thermoplastic moulding compositions containing

A) 10 to 98 parts by weight of block copolycarbonates according to claim 1,

B) 0 to 88 parts by weight of aromatic polycarbonates, and optionally
C) 2 to 20 parts by weight of polyisobutylene or
D) 5 to 50 parts by weight of a graft polymer,

wherein the sum of all the parts by weight of components A + B + C + D is 100,
with the proviso that the content of polyisobutylene-α-halogeno-ketocarboxylic acids in the total mixture (of A + B + C + D) ranges from 0.5 to 20 % by weight with respect to 100 % by weight, and with the proviso that the mixture contains component B) if it does not contain components C) or D).

**8.** Thermoplastic moulding compositions according to claim 7, wherein the graft polymers can be obtained from at least 2 of the following monomers:
chloroprene, 1,3-butadiene, isoprene, a halogenated styrene or a styrene comprising a methyl-substituted nucleus, ethylene, propylene, vinyl acetate, a $C_1$-$C_{18}$ alkyl methacrylate, a $C_1$-$C_{18}$ alkyl acrylate, maleic anhydride, or $C_1$-$C_4$ alkyl- or phenyl-N-substituted maleinimides.

**9.** Thermoplastic moulding compositions according to claim 8, wherein the graft copolymers can be obtained from

D.1) 5 to 95 parts by weight of a mixture comprising

D.1.1) 50 to 95 parts by weight of styrene, α-methylstyrene, a halogenated styrene or a styrene comprising a methyl-substituted nucleus, a $C_1$-$C_8$ alkyl methacrylate, a $C_1$-$C_8$ alkyl acrylate, or mixtures of these compounds, and

D.1.2) 5 to 50 parts by weight of acrylonitrile, methacrylonitrile, $C_1$-$C_8$ alkyl methacrylates, a $C_1$-$C_8$ alkyl acrylate, maleic anhydride, $C_1$-$C_4$ alkyl- or phenyl-N-substituted maleinimides, or mixtures of these compounds, grafted on to

D.2) 5 to 95 parts by weight of a polymer having a glass transition temperature below -10°C.

**10.** Thermoplastic moulding compositions according to claim 7, containing additives selected from the group comprising stabilisers, demoulding agents, anti-ageing agents, flame retardants, pigments, colorants, fillers and reinforcing agents.

## Revendications

**1.** Copolycarbonates séquencés pouvant être obtenus à partir de blocs polycarbonate et de 0,5 à 30% en poids (sur base du copolycarbonate séquencé) de blocs polyisobutylène-acide α-halogénocétocarboxylique (blocs PIB), où les blocs polyisobutylène-acide α-halogénocétocarboxylique présentent un poids moléculaire moyen $\overline{M}n$ (moyenne en nombre) compris entre 500 et 50 000, une teneur en halogène (chlore ou brome) allant de 0,1 à 15% en poids (sur base des blocs PIB) et un indice d'acide compris entre 2 et 250 mg KOH/g, et peuvent être obtenus par clivage oxydatif au moyen d'ozone de caoutchoucs halobutyle qui peuvent être obtenus par copolymérisation d'isobutylène avec 0,3 à 15% en moles de 1,3-diène et ensuite, halogénation en solution, en position allyle avec du brome ou du chlore élémentaire.

**2.** Copolycarbonates séquencés suivant la revendication 1, où les blocs polyisobutylène-acide α-halogénocétocarboxylique peuvent être obtenus par clivage oxydatif au moyen d'ozone de caoutchoucs halobutyle, où les caoutchoucs halobutyle sont obtenus par copolymérisation d'isobutylène avec 0,3 à 15% en moles d'isoprène et ensuite, halogénation en solution, en position allyle avec du brome ou du chlore élémentaire et où la viscosité Mooney des caoutchoucs halobutyle se situe dans l'intervalle allant de 30 à 80 et le poids moléculaire moyen $\overline{M}_n$ allant de 20 000 à 1 000 000.

**3.** Copolycarbonates séquencés suivant la revendication 1, où le poids moléculaire ($\overline{M}_w$) des copolycarbonates séquencés se situe dans l'intervalle allant de 8000 à 150 000.

**4.** Copolycarbonates séquencés suivant la revendication 1, où les blocs polyisobutylène-acide α-halogénocétocarboxylique ont un poids moléculaire moyen Mn (moyenne en nombre) allant de 50 à 50 000.

**5.** Copolycarbonates séquencés suivant la revendication 1, où la teneur en halogène des blocs PIB se situe dans l'intervalle allant de 0,5 à 5% en poids.

**6.** Procédé de préparation de copolycarbonates séquencés suivant la revendication 1, où l'on fait réagir, d'après le procédé en solution en phase dispersée, les diphénols, le phosgène, en présence d'agents de terminaison de chaîne, facultativement en présence d'agents de ramification et/ou de catalyseurs, en ajoutant des polyisobutylène-acide $\alpha$-halogénocétocarboxylique.

**7.** Matières moulables thermoplastiques, contenant :

A) 10 à 98 parties en poids de copolycarbonates séquencés suivant la revendication 1,
B) 0 à 88 parties en poids de polycarbonates aromatiques, et facultativement
C) 2 à 20 parties en poids de polyisobutylène, ou
D) 5 à 50 parties en poids de polymère greffé,

où la somme de toutes les parties en poids des composants A+B+C+D fait 100, avec la condition que la teneur en polyisobytulène-acide $\alpha$-halogénocétocarboxylique dans le mélange total (de A+B+C+D) se situe dans l'intervalle allant de 0,5 à 20% en poids pour 100% en poids et avec la condition que le mélange contient le composant B) si les composants C) ou D) ne sont pas présents.

**8.** Matières moulables thermoplastiques suivant la revendication 7, où les polymères greffés sont obtenus à partir d'au moins 2 des monomères suivants : le chloroprène, le butadiène-1,3, l'isoprène, le styrène substitué sur le noyau par halogène ou méthyle, l'éthylène, le propylène, l'acétate de vinyle, le méthacrylate d'alcoyle en $C_1$-$C_{18}$, l'acrylate d'alcoyle en $C_1$-$C_{18}$, l'anhydride maléique, le maléimide N-substitué par alcoyle en $C_1$-$C_4$ ou phényle.

**9.** Matières moulables thermoplastiques suivant la revendication 8, où les polymères greffés sont obtenus à partir de :

D1) 5 à 95 parties en poids d'un mélange de :

D1.1) 50 à 95 parties en poids de styrène, d'$\alpha$-méthylstyrène, de styrène substitué sur le noyau par halogène ou méthyle, de méthacrylate d'alcoyle en $C_1$-$C_8$, d'acrylate d'alcoyle en $C_1$-$C_8$ ou de mélanges de ces composés, et
D1.2) 5 à 50 parties en poids d'acrylonitrile, de méthacrylonitrile, de méthacrylate d'alcoyle en $C_1$-$C_8$, d'acrylate d'alcoyle en $C_1$-$C_8$, d'anhydride maléique, de maléimide N-substitué par alcoyle en $C_1$-$C_4$ ou phényle ou des mélanges de ces composés,

D2) 5 à 95 parties en poids de polymère avec une température de transition vitreuse inférieure à -10°C.

**10.** Matières moulables thermoplastiques suivant la revendication 7, contenant des additifs choisis parmi le groupe des stabilisants, aides au démoulage, agents de protection contre le vieillissement, agents de protection contre les flammes, pigments, colorants, charges et matières de renforcement.